Europäisches Patentamt

European Patent Office

Office européen des brevets

(19)

(11) **EP 1 469 302 B1**

(12) **EUROPEAN PATENT SPECIFICATION**

(45) Date of publication and mention
of the grant of the patent:
**29.03.2006 Bulletin 2006/13**

(51) Int Cl.:
*G01N 23/20* (2006.01)

(21) Application number: **03008687.0**

(22) Date of filing: **16.04.2003**

(54) **Method of fast simulation and fitting of x-ray specta from superlattices**

Verfahren zur schnellen Simulation und Anpassung von Röntgenspektren von Supergittern

Méthode pour simuler et ajuster rapidement des spectres aux rayons x des superréseaux

(84) Designated Contracting States:
**DE GB NL**

(43) Date of publication of application:
**20.10.2004 Bulletin 2004/43**

(73) Proprietor: **Bruker AXS GmbH**
**76187 Karlsruhe (DE)**

(72) Inventors:
• **Feranchuk, Ilya**
**220050 Minsk (BY)**
• **Ulyanenkov, Alex**
**76185 Karlsruhe (DE)**

(74) Representative: **Kohler Schmid Möbus**
**Patentanwälte**
**Ruppmannstrasse 27**
**70565 Stuttgart (DE)**

(56) References cited:
• **STEPANOV S A ET AL: "Dynamical X-ray diffraction of multilayers and superlattices: recursion matrix extension to grazing angles" PHYSICAL REVIEW B (CONDENSED MATTER), 15 FEB. 1998, APS THROUGH AIP, USA, vol. 57, no. 8, pages 4829-4841, XP002257678 ISSN: 0163-1829**
• **ULYANENKOV A P ET AL: "A dynamical diffraction approach to grazing-incidence X-ray diffraction by multilayers with lateral lattice misfits" JOURNAL OF PHYSICS D (APPLIED PHYSICS), 14 DEC. 1995, IOP PUBLISHING, UK, vol. 28, no. 12, pages 2522-2528, XP002257679 ISSN: 0022-3727**
• **ULYANENKOV A: "Grazing-incidence X-ray diffraction from multilayers, taking into account diffuse scattering from rough interfaces" APPLIED PHYSICS A (MATERIALS SCIENCE PROCESSING), FEB. 1998, SPRINGER-VERLAG, GERMANY, vol. A66, no. 2, pages 193-199, XP002257680 ISSN: 0947-8396**
• **STEPANOV S A ET AL: "X-ray resonant reflection from magnetic multilayers: Recursion matrix algorithm" PHYSICAL REVIEW B (CONDENSED MATTER), 1 JUNE 2000, APS THROUGH AIP, USA, vol. 61, no. 22, pages 15302-15311, XP002257681 ISSN: 0163-1829**

## Description

## Background of the invention

The invention concerns a method of simulation and/or fitting of X-ray scattering patterns comprising reflection and diffraction from multilayers with N repeating basic periods of a superlattice comprising a number L of single layers within each basic period, on a substrate, with X-ray detection of experimental X-ray patterns and comparison of detected patterns with calculated patterns.

A method of such kind is disclosed in US 5, 442, 676.

X-ray diffraction is a powerful tool for obtaining information about the structure and material properties of samples, in particular samples with crystalline phases. The interaction of incident X-rays with the sample is correlated to said structure and material properties, so suitable analysis of an experimentally detected scattered X-ray pattern reveals information about the structure and material properties of the sample.

Only with simple samples, the structure or material properties of a sample can directly be calculated from the scattering pattern. With more complex samples, a trial and error fitting procedure is applied: For an assumed structure of the sample, the interaction of the incident X-rays with the sample is simulated, usually involving a computer determining a calculated scattered X-ray pattern. Then the experimentally detected and the calculated scattered X-ray patterns are compared. If the patterns do not match, a new assumed structure of the sample is appointed, and the simulation is done again with this new assumed structure. This procedure is repeated until a good match of the calculated and the experimentally detected scattering pattern is achieved, and the corresponding assumed structure of the sample is determined as the true structure of the sample.

During the simulation process, the scattering behavior of all structural elements of the sample must be considered in order to get a good simulation result.

An important group of samples suitable for the above described trial and error approach are multilayers on substrates, in particular multilayers with a superlattice, i.e. the multilayers comprise a repeating substructure called basic period. Multilayers with a superlattice, sometimes referred to as periodic multilayers, are used e.g. for X-ray mirrors, hard disks; and in light emitting diodes and laser diodes.

The growth process for periodic multilayers is relatively difficult. In particular, alloy interfaces of considerable thickness may occur between neighboring layers, contaminations may be introduced, e.g. by interlayer diffusion, and so on. In order to control the growth process, the grown periodic multilayers are analyzed by X-ray analysis applying the above mentioned trial and error fitting procedure.

The number of layers in such periodic multilayers is rather high, with currently typically comprising 100 to 200 (single) layers. In order to calculate the scattered X-ray pattern in the state of the art, the interaction of the X-rays is calculated at each single layer interface, thus taking into account each single layer consecutively along with the propagation of the X-rays through the sample. This means for each single layer, a calculation operation is necessary for the crossing of the layer by the X-rays when approaching the substrate and when returning to the sample surface. Each calculation operation involves a matrix multiplication. So the total number of calculating operations is proportional to the total number of layers in the sample.

For these reasons, the calculation of a scattered X-ray pattern by methods of the state of the art is very time consuming and requires powerful computer equipment.

## Object of the invention

It is the object of the invention to present a method for calculating an X-ray scattering pattern of a periodically multilayered film sample on a substrate which is fast and simple to carry out.

## Brief description of the invention

This object is achieved, according to the invention, by performing the method as defined in claim 1.

By means of the inventive method, the information about the periodicity of the multilayer structure is used to simplify and accelerate the simulation process. Once one basic period of the superlattice, i.e. one of the repetition structures, is calculated with respect to its scattering behavior, this intermediate result is translated to the remaining repetition structures without calculating the internal scattering behavior for these remaining scattering structures again.

This means, the number of calculation operations within the inventive method is basically done by L calculation operations for determining the scattering behavior of one basic period, plus a translation calculation (comprising 3 matrix multiplication processes) for the remaining repetitions of the basic period. In this transfer calculation, the number N of basic periods is just a factor, and not an exponent determining a number of time consuming matrix multiplications. Thus, the total number of calculation operations (i.e. matrix multiplications) in the inventive method is independent of N. In contrast to that, state of the art simulations do not make use of the periodicity information of the multilayered structure during the simulation process, making N*L calculation operations (i.e. matrix multiplications) necessary. In particular for samples with large numbers N of basic periods within the superlattice, or large numbers L of layers within one basic period, the inventive method accelerates the simulation time considerably.

In a highly preferred variant of the inventive method in step c) the analytical representation of the wavefield is calculated by

$$E_i^N = \lambda_1^N \sum_{j=1}^{p} \left[ \hat{Q}_N^{-1} \hat{S}_1^{-1} \hat{S}_0 \right]_{ij} E_j^0$$

wherein $\hat{Q}_{ij} = \sum_{s=1}^{p} \left( \dfrac{\lambda_1}{\lambda_s} \right)^N \hat{\Psi}_i^s \left( \hat{\Psi}^{-1} \right)_j^s$ , wherein $E_i^0$ is the incident and scattering fields in vacuum, wherein $\hat{S}_0$, $\hat{S}_1$ are scattering matrices describing the transformation of the wavefield passing through the interface, $\hat{S}_0$ corresponds to the interface between vacuum and first layer and $\hat{S}_1$ corresponds to interface between first layer and second layer, wherein $\lambda_s$ are eigenvalues of the transfer matrix $M$ which describes the transformation of the wavefield passing through single basic period of the superlattice and $\Psi_i^s$ are eigenwaves of the transfer matrix $\hat{M}$, with $\hat{M}\Psi_i^s = \lambda_s \overline{\Psi}_i^s$ ; with s, i = 1 ...p, with $p$ = 2 for X-ray reflection and p = 4 for X-ray diffraction, and wherein $E_i^N$ are components of the wavefield after passing N periods of the superlattice, wherein $\lambda_1$ is the maximal eigenvalue of $\lambda_s$.

The detailed structure of scattering and transfer matrices depends on the structure of basic period of superlattice and can be found by using known methods (e.g., High-Resolution X-Ray Scattering from Thin Films and Multilayers, Vaclav Holy, T. Baumbach, U. Pietsch, ISBN: 354062029X, 267pp, Pub. Date: January 1999, Publisher: Springer-Verlag New York, Incorporated).

These analytical formulas for the field can be understood as follows:
Let us introduce the transfer matrix $\hat{M}$ for one period of the superlattice. It describes passing of the wave field through one SL period and is calculated by well known methods both for reflectometry (Parratt's formalism) and for diffraction (dynamical diffraction). For the wave fields with given polarization, this is the matrix with dimension of $(p \times p)$ $(p = 2$ for x-ray reflectivity and p = 4 for x-ray diffraction).

The claimed analytical formula for the wave field after passing through N SL-periods are based on the eigen-waves $\Psi^s_i$ and eigenvalues $\lambda_s$, of the matrix $\hat{M}$ which are calculated from the algebraic system of equations

$$\hat{M}\Psi_i^s = \lambda_s \overline{\Psi}_i^s \quad s,i = 1...p$$

In the standard approach the components $E_i^N$ of the wave field after passing of N SL-periods are connected with the incident and scattering fields in vacuum $E_i^0$ by means of multiplication of $(N+2)$ matrixes. The invention allows to calculate this field analytically by means of multiplication only 3 matrixes for any number of SL-period. Our formula is the following

$$E_i^N = \lambda_1^N \sum_{j=1}^{p} \left[ \hat{Q}_N^{-1} \hat{S}_1^{-1} \hat{S}_0 \right]_{ij} E_j^0$$

$$\hat{Q}_{ij} = \sum_{s=1}^{p} \left( \dfrac{\lambda_1}{\lambda_s} \right)^N \hat{\Psi}_i^s \left( \hat{\Psi}^{-1} \right)_j^s$$

with $\lambda_s$ as the maximal eigenvalue and the well known matrices $\hat{S}_0$, $\hat{S}_1$ which define scattering of the wave field on the first SL interface (see Reference of Stepanov).

Alternatively or in addition, a variant of the inventive method is characterized in that in step d) the intensity distribution for diffraction is calculated by

$$I_{diff} = \left| \frac{Z_{22}Z_{41} - Z_{42}Z_{21}}{Z_{11}Z_{22} - Z_{12}Z_{21}} \right|,$$

wherein $I_{diff}$ is the intensity of the scattered radiation in vacuum for X-ray diffraction, and that the intensity distribution for reflection is calculated by

$$I_{spec} = \left| \frac{Z_{21}}{Z_{11}} \right|^2$$

wherein $I_{spec}$ is the intensity of the scattered radiation in vacuum for X-ray reflection, wherein $\hat{Z} = \hat{S}_0^{-1} \hat{S}_1 \hat{Q} \hat{S}_1^{-1} \hat{S}_{sub}$, wherein $\hat{S}_{sub}$ is the scattering matrix describing the transformation of wavefield passing through the interface between bottommost layer and substrate, wherein $\hat{Q}_{ij} = \sum_{s=1}^{p} \left( \frac{\lambda_1}{\lambda_s} \right)^N \hat{\Psi}_i^s \left( \hat{\Psi}^{-1} \right)_j^s$, wherein $\hat{S}_0$, $\hat{S}_1$ are scattering matrices describing the transformation of the wavefield passing through the interface, $\hat{S}_0$ corresponds to the interface between vacuum and first layer and $\hat{S}_1$ corresponds to interface between first layer and second layer, wherein $\lambda_s$ are eigenvalues of the transfer matrix $M$ which describes the transformation of the wavefield passing through single basic period of the superlattice and $\Psi_i^s$ are eigenwaves of the transfer matrix $\hat{M}$, with $\hat{M}\Psi_i^s = \lambda_s \overline{\Psi}_i^s$ ;with s,i = 1...p, with p = 2 for X-ray reflection and p = 4 for X-ray diffraction, wherein $\lambda_1$ is the maximal eigenvalue of $\lambda_s$.

Theses analytical expressions for intensity can be understood as follows:

Analytical formulas for the wave field after passing of N SL-period allows to take into account the boundary conditions on the substrate and find the analytical formula for the intensity of the observed radiation in vacuum in the result of scattering by superlattice.

Let us calculate the matrix

$$\hat{Z} = \hat{S}_0^{-1} \hat{S}_1 \hat{Q} \hat{S}_1^{-1} \hat{S}_{sub}$$

wherein the matrix $\hat{S}_{sub}$ defines the field scattering at the substrate interface.

Then the intensity of the scattered field in vacuum is defined by the formulas

$$I_{diff} = \left| \frac{Z_{22}Z_{41} - Z_{42}Z_{21}}{Z_{11}Z_{22} - Z_{12}Z_{21}} \right|$$

in the case of x-ray diffraction and

$$I_{spec} = \left| \frac{Z_{21}}{Z_{11}} \right|^2$$

in the case of x-ray reflectivity.

Also alternatively or in addition, in a variant of the inventive method is characterised in that there is a mass density gradient across the single layers approximated by a finite number of discrete sublayers each with a uniform mass density. In this situation, a particularly large number of effective layers L' per basic period is necessary. As a consequence, the number of calculation operations (L')*N without using the inventive method increases enormously. Therefore, for this application, the inventive method is particularly fast. In accordance with the invention, the basic period may be comprised exclusively or only partially of single layers having a mass density gradient.

In another preferred variant, the X-ray scattering pattern comprises X-ray diffraction patterns from a crystal superlattice with crystallographic lattice strain gradients or material contamination gradients in the single layers approximated by a finite number of discrete sublayers each with a uniform lattice strain or material contamination. Again, for this application, the effective number of layers L' is large, and the inventive method is accelerating the simulation process.

In another variant of the inventive method, the X-ray scattering pattern comprises X-ray diffraction patterns from a crystal superlattice in the case of strongly asymmetrical and grazing-incidence or grazing-exit geometry of diffraction. These X-ray patterns are often simulated for quality analysis of samples.

A highly preferred variant of the inventive method is characterised by introducing as an additional parameter a mean squared fluctuation of the superlattice period for fitting of superlattice peaks in the X-ray scattering pattern. This can be used to analyze superlattice peaks, in particular their damping factors in the scattered X-ray pattern. The accuracy of the match of calculated and experimentally detected X-ray scattering pattern can be increased by optimizing the inventive additional parameter, thus increasing the accuracy of the determination of the structure and the material properties of the sample.

Another advantageous variant of the inventive method is characterised by introducing the analytical representation of the X-ray wavefield in the superlattice for fast simulation and fitting of any characteristics containing integrated electromagnetic fields such as diffuse scattering patterns in the frameworks of distorted-wave Born approximation or instrumental function. The availability of an analytical representation of the X-ray wavefield by means of the invention can thus be used not only for accelerating the simulation of the scattered X-ray pattern, but also for gaining further information about the sample.

In a further variant of the method, the number L of single layers within a basic period of the superlattice is between 2 and 20. These numbers of L represent typical applications for which characterization for quality checks is performed, and wherein high speed analysis and thus high speed simulation and fitting are necessary.

In another variant of the inventive method, the number N of repeating basic periods of the superlattice is between 2 and 1000, preferably between 5 and 200, most preferably about 100. These numbers of N also represent typical applications for which high speed analysis is necessary. Also, state of the art methods are usually overtaxed by periodic multilayer structures involving a number N of repeating basic periods of 100 or higher.

Furthermore, a variant of the inventive method is characterised in that the thicknesses of the single layers are in a range between 0,1nm and 10$\mu$m, preferably between 0,5nm and 10nm. When the layer thicknesses are in the nanometer range, the total number N*L of layers summed over all basic periods is usually too high for conventional methods to be practicable within acceptable time periods. Thus, the inventive method is particularly useful for this application.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

Drawings

The invention is shown in the drawings.

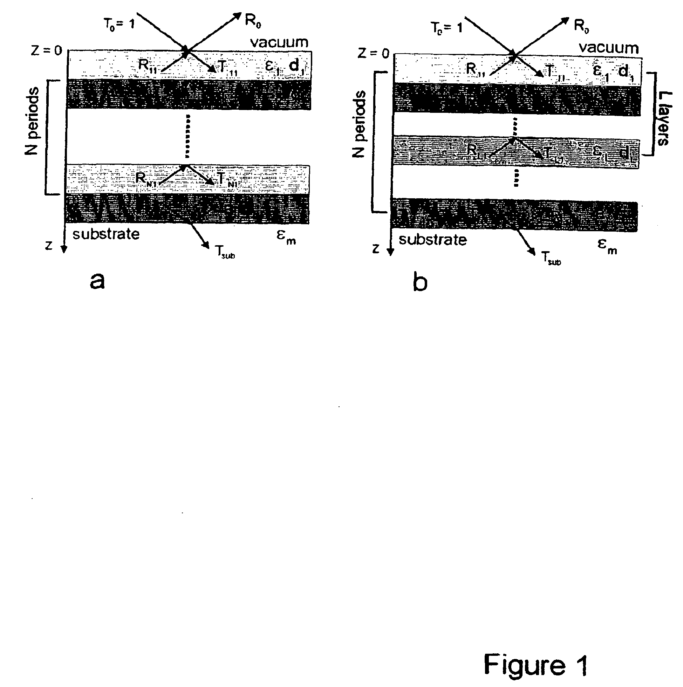

Fig. 1 a    shows a periodic multilayer with a two-layer basic period which is subject to the inventive method;

Fig. 1 b    shows a periodic multilayer with an L layers basic period which is subject to the inventive method;

Fig. 2    shows an X-ray reflectivity pattern for a [Si/Ge]$_{60}$ superlattice calculated by the inventive method and by recurrent Parratt's equations, with an insert comparing the calculation time of both methods;

Fig. 3    shows an X-ray reflectivity pattern for a [AlAs/GaAs/InAs/GaSb]$_{40}$ multicomponent superlattice calculated by the inventive method, and an insert comparing the calculation time of the inventive method with a conventional method;

Fig. 4 shows an experimental and a calculated X-ray pattern, wherein the calculated X-ray pattern has been fitted applying a period thickness fluctuation parameter,

Fig. 5 shows a periodic multilayer which is subject to the inventive method, illustrating the wave field vectors $\bar{D}$ ;

Fig. 6 shows an X-ray reflectivity pattern for a $[Ge/Si/Si_{0.8}Ge_{0.2}]_{100}$ superlattice calculated by the inventive method and a conventional recursive method, with an insert comparing the calculation time of both methods;

Fig. 7 shows an X-ray reflectivity pattern for a $[Ge/Si/Si_{0.8}Ge_{0.2}]_{100}$ superlattice calculated by the inventive method with two different period fluctuation parameters.

Detailed description of the invention

The analytical solution of recurrent equations for amplitudes of electromagnetic field is found for description of x-ray reflection and diffraction from periodical multilayered media. The method proposed uses the Bloch eigenwaves approach for periodical structure, which reduces considerably the computer time required for simulation of diffracted/ reflected x-ray intensity and, therefore, accelerates the fitting trial-and-error procedure for sample model parameters. Numerical examples and fit results for experimental x-ray data are provided to demostrate the effectiveness of method. A new parameter describing the fluctuation of superlattice period is introduced and its influence on experimental data interpretation is discussed.

I. INTRODUCTION

In recent decade, a numerous analytical methods and techniques have been developed and reported for calculation of x-ray reflectivity, diffraction and diffuse scattering spectra (see, for example [1]). However, increasing demand for the x-ray methods from industry and science emphasizes the problem of algorithm improvements, both in accelcration and precision aspects. This task is especially important when the experimental data from complex samples have to be fastly and accurately fitted by theoretical models.
The multilayers and superlattices, consisting of large number of repeating periods of basic thin layers, make up a wide class of samples in semiconductor and nanotechnology industries. X-ray methods are proved to be very advantageous for investigation of these structures. In general case, the solution of Maxwell's equations for x-ray wavefield in multilayers is reduced to the system of recurrent equations, the scalar ones for reflectivity [2], and matrix ones for diffraction [3]. The theoretical interpretation of experimental x-ray data, based on the transfer matrices [3], delivers convenient formalism to solve general recurrent equations for multilayered structures in both reflectivity. [2] and diffraction [5] cases. For periodical structures, using the powers of the transfer matrix for basic element of superlattice (SL), the time of calculation can be considerably reduced [4]. However, this technique requires the calculation of high powers of matrices, which is also time-consuming procedure because of the number of numerical operations exponentially increases with the number of SL-elements. There are several approximated methods for reduction of calculation time, for example, kinematical approach and single-reflection approximation [1], but they do not provide sufficient precision for thick SLs and superlattices with large number of layers. Thus, the development of methods reducing the calculation time for x-ray reflectivity and diffraction from periodical multilayered structures is an actual task of applied x-ray physics.
A new method proposed in this paper utilizes the possibility to express the Bloch eigenwaves of one-dimensional periodical infinite layer stack through the solutions of x-ray scattering problem within the single basic element composing the superlattice period [6]. For superlattice with limited number of periods, these Bloch eigenwaves can further be used along with the boundary conditions for whole layer stack, that results in analytical expression for the electromagnetic field and integral reflection coefficient in any point of sample, with no need to solve the recurrent equations. This approach is further called in this paper a "method of eigenwaves" (MEW). In present paper, the effectiveness of MEW is analysed for calculation of x-ray reflectivity (XRR) and high-resolutions x-ray diffraction (HRXRD) intensities from superlattices. Comparison of MEW with other approaches demonstrates the essential time reduction for calculation and fitting of x-ray intensities. The paper is arranged as follows: in Section II the analytical solution for reflection coefficient from bilayered periodical superlattice is found. The results of calculations coincide with the numerical solution of the same problem by Parratt's equations, however, the advantage of MEW is the considerable acceleration of the simulation process. In Section III, the superlattice with arbitrary basic periodical element is considered. The combination of Parratt's recursive equations with MEW is used to achieve the best performance of simulation technique. A parameter for characterization of superlattice period fluctuation is also introduced to obtain a closer fit of theory and experiment. In Section IV, MEW approach is extended to description of x-ray diffraction from superlattices. The diffraction process inside basic periodical element of superlattice is calculated by matrix method [5], and the evolution of diffraction into entire superlattice is described by MEW.

## II. MEW FOR X-RAY REFLECTIVITY FROM TWO-COMPONENT SUPERLATTICE

Let us consider the reflection of monochromatic x-ray beam with certain polarization and wavenumber $k = 2\pi/\lambda$ from a multilayered structure consisting of $N$ layers grown on substrate. The structure is assumed to be a superlattice composed by multiple repetition of basic layer period, consisting of two layers (see Figure 1a) and the x-rays impinge the sample at the incidence angle a. In x-ray reflectometry, the lateral dimension of a layer is supposed to be infinite, which results in (i) conservation of lateral component of wavevector, and (ii) dependence of wavefield on solely z-cornponent of wavevector. For the problem considered in this paper, the following variables, defined through the permittivity $\epsilon$, are essential for description of scattering process:

$$k_{z0} = k\sin\alpha; \qquad k_{zm} = k\sqrt{\epsilon_m - \cos^2\alpha};$$
$$k_{z1} = k\sqrt{\epsilon_1 - \cos^2\alpha}; \qquad k_{z2} = k\sqrt{\epsilon_2 - \cos^2\alpha};$$
$$\epsilon_t = n_t^2 = (1 - \delta_t + i\beta_t)^2, \qquad (1)$$

where z-axis is a perpendicular inward normal to the sample surface; the values $1 - \delta_t$ and $\beta_t$ are the real and imaginary components [10] of refractive index $n_t$, $t = 0, m, 1, 2$ for vacuum, substrate and layers respectively. The general solution of Maxwell's equations for the layer with number $l$ ($l = 0$ corresponds to vacuum) is

$$E_l(x, z) = e^{ikx\cos\alpha}\Psi_l(z) : \Psi_l(z) = T_{1l}e^{ik_{z1}(z-ld)} + R_{1l}e^{-ik_{z1}(z-ld)}; \quad ld \le z \le ld + d_1;$$
$$\Psi_l(z) = T_{2l}e^{ik_{z2}(z-ld)} + R_{2l}e^{-ik_{z2}(z-ld)}; \quad ld + d_1 \le z \le (l+1)d. \quad (2)$$

The condition of wavefield continiuty at the boundary between the layers 1 and 2 within the $l$-period of SL

$$T_{1l}e^{ik_{z1}d_1} + R_{1l}e^{-ik_{z1}d_1} = T_{2l}e^{ik_{z2}d_1} + R_{2l}e^{-ik_{z2}d_1}$$
$$k_{z1}[T_{1l}e^{ik_{z1}d_1} - R_{1l}e^{-ik_{z1}d_1}] = k_{z2}[T_{2l}e^{ik_{z2}d_1} - R_{2l}e^{-ik_{z2}d_1}], \qquad (3)$$

is used to express the reflection and transmission coefficients in second layer via the corresponding parameters of the first layer:

$$T_{2l} = \beta_{11}T_{1l} + \beta_{12}R_{1l}; \quad R_{2l} = \beta_{21}T_{1l} + \beta_{22}R_{1l};$$
$$\beta_{11} = \frac{k_{z2} + k_{z1}}{2k_{z2}}e^{i(k_{z1}-k_{z2})d_1}; \quad \beta_{12} = \frac{k_{z2} - k_{z1}}{2k_{z2}}e^{-i(k_{z1}+k_{z2})d_1};$$
$$\beta_{21} = \frac{k_{z2} - k_{z1}}{2k_{z2}}e^{i(k_{z1}+k_{z2})d_1}; \quad \beta_{22} = \frac{k_{z2} + k_{z1}}{2k_{z2}}e^{-i(k_{z1}-k_{z2})d_1}. \qquad (4)$$

The same conditions at the boundary between the layers $l$ and $l + 1$ result in

$$T_{1(l+1)} = \gamma_{11}T_{2l} + \gamma_{12}R_{2l}; \quad R_{1(l+1)} = \gamma_{21}T_{2l} + \gamma_{22}R_{2l};$$
$$\gamma_{11} = \frac{k_{z2} + k_{z1}}{2k_{z1}}e^{ik_{z2}d}; \quad \gamma_{12} = \frac{k_{z1} - k_{z2}}{2k_{z1}}e^{-ik_{z2}d};$$
$$\gamma_{21} = \frac{k_{z1} - k_{z2}}{2k_{z1}}e^{ik_{z2}d}; \quad \gamma_{22} = \frac{k_{z2} + k_{z1}}{2k_{z1}}e^{-ik_{z2}d}. \qquad (5)$$

To make an expression more clear, the (2 x 2) transfer matrix $\hat{M}$ can be introduced [3], which defines the transformation of transmission and reflection coefficients by a single layer of the basic period of superlattice:

$$T_{1(l+1)} = M_{11}T_{1l} + M_{12}R_{1l}; \quad R_{1(l+1)} = M_{21}T_{1l} + M_{22}R_{1l};$$

$$M_{11} = \beta_{11}\gamma_{11} + \beta_{21}\gamma_{12}; \quad M_{12} = \beta_{12}\gamma_{11} + \beta_{22}\gamma_{12};$$

$$M_{21} = \beta_{11}\gamma_{21} + \beta_{21}\gamma_{22}; \quad M_{22} = \beta_{12}\gamma_{21} + \beta_{22}\gamma_{22}. \tag{6}$$

If the phase of wavefield is defined in accordance with the Eq.(2), then the transfer matrix does not depend on index $l$ numbering the superlattice layers. This fact makes it possible to use the powers of matrix $\hat{M}$ for calculation of full transfer matrix of superlattice |4|. Such an approach reduces the calculation time in comparison with the direct solution of recurrent equations. However, MEW simplifies this solution even more because it expresses the total reflection coefficient in analytical form. To derive this form, the two-component eigenvectors $A^{(s)} = (T^{(s)}, R^{(s)}; s = 1, 2$ of matrix $\hat{M}$ has to be introduced:

$$\hat{M}A^{(s)} = \lambda_s A^{(s)};$$

$$\lambda_{1,2} = \frac{M_{11} + M_{22}}{2} \pm \sqrt{\frac{(M_{11} - M_{22})^2}{4} + M_{12}M_{21}};$$

$$-R^{(s)} = \nu_s T^{(s)} = \frac{\lambda_s - M_{11}}{M_{12}} T^{(s)}. \tag{7}$$

The wavefields determined by coefficients (7) create a basis of egenwaves (EW) in infinite periodical layer stack. If the eigenvalues are indexed in such a way that $|\lambda_1| < |\lambda_2|$, the values $T^{(s)}$ then represent the amplitudes of EW, which are excited in the finite stack by the incident plane wave. To find these amplitudes $T^{(s)}$, the boundary conditions have to be used at the interfaces superlattice/vacuum and superlattice/substrate. The wavefield at first interface is represented as a superposition of eigenwaves:

$$\Psi_1(z) = T^{(1)}[e^{ik_{1z}z} + \nu_1 e^{-ik_{1z}z}] + T^{(2)}[e^{ik_{1z}z} + \nu_2 e^{-ik_{1z}z}]. \tag{8}$$

The continiuty of this wavefield at the surface z = 0 results in equations

$$1 + R_0(\alpha) = T^{(1)}(1 + \nu_1) + T^{(2)}(1 + \nu_2);$$

$$k_{z0}[1 - R_0(\alpha)] = k_{z1}[T^{(1)}(1 - \nu_1) + T^{(2)}(1 - \nu_2), \tag{9}$$

where $R_0(\alpha)$ is the integral reflection coefficient from the entire superlattice. Because of the equation (7) for EW, the reflection and transmission coefficients in the last layer with number N are:

$$T_{1N} = \lambda_1^N T^{(1)} + \lambda_2^N T^{(2)}; \quad R_{1N} = \nu_1 \lambda_1^N T^{(1)} + \nu_2 \lambda_2^N T^{(2)};$$

$$T_{2N} = \beta_{11}T_{1N} + \beta_{12}R_{1N}; \quad R_{2N} = \beta_{21}T_{1N} + \beta_{22}R_{1N}. \tag{10}$$

The boundary conditions at interface z = Nd, where wavefield is only defined by transmission coefficient $T_{sub}$, complete the equations system for four unknown variables $R_0$, $T^{(1)}$, $T^{(2)}$ and $T_{sub}$:

$$T_{sub}e^{ik_{zs}Nd} = T_{(2N)}e^{ik_{z2}d} + R_{(2N)}e^{-ik_{z2}d};$$

$$k_{zm}T_{sub}e^{ik_{zm}Nd} = k_{z2}[T_{(2N)}e^{ik_{z2}d} - R_{(2N)}e^{-ik_{z2}d}]. \qquad (11)$$

The equations system (9-11) delivers the expression for $R_0(\alpha)$, which is, in fact, the analytical solution of the recurrent Parratt's equations for the whole stack of the layers:

$$R_0(\alpha) = -\frac{k_{z1}[1 - \nu_1 + P_N(1 - \nu_2)] - k_{z0}[1 + \nu_1 + P_N(1 + \nu_2)]}{k_{z1}[1 - \nu_1 + P_N(1 - \nu_2)] + k_{z0}[1 + \nu_1 + P_N(1 + \nu_2)]};$$

$$P_N = -\left(\frac{\lambda_1}{\lambda_2}\right)^N \frac{(k_{zm} - k_{z2})(\beta_{11} + \beta_{12}\nu_1)e^{ik_{z2}d} + (k_{zm} + k_{z2})(\beta_{21} + \beta_{22}\nu_1)e^{-ik_{z2}d}}{(k_{zm} - k_{z2})(\beta_{11} + \beta_{12}\nu_2)e^{ik_{z2}d} + (k_{zm} + k_{z2})(\beta_{21} + \beta_{22}\nu_2)e^{-ik_{z2}d}}. \qquad (12)$$

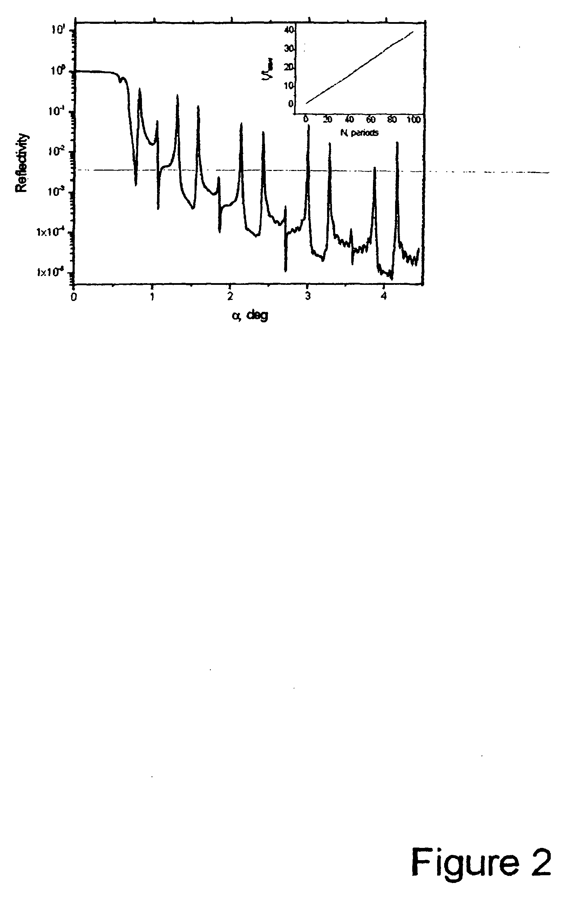

Figure 2 shows simulated by formula (12) x-ray reflectivity from [Si/Ge]$_{60}$ superlattice with the thickness of layers di = 10 nm, $d_2$ = 20 nm on Si substrate. The curve is identical to the one calculated by recurrent Parratt's equations [2]. However, the computer time required for these both simulations is essentially different, especially when the number of superlattice periods is large (see inset in Fig.2). The numerical solution of the Parratt's equations [2] involves $\simeq 4(4)^N$ operations, which increases the simulation time exponentially. When the powers of matrices are used for calculation of $R_0(\alpha)$, the time increases as a power law with increasing of $N$ [4], whereas the use of the Eq.(12) makes the number of operations to be independ on $N$. This advantage of MEW is even more pronounced for the experimental data fitting routines, which simulate the x-ray reflectivity many times during the trial-and-error procedure.

## III. MEW FOR X-RAY REFLECTIVITY FROM SUPERLATTICE WITH ARBITRARY STRUCTURE OF THE BASIC PERIOD

The technique presented in previous section can be also applied to complicated sample models, for example to the superlattice, the basic period of which consists ofL layers with thicknesses $d_j$, $j$ = 1,..., $L$; $\Sigma_j d_j = d$ and refraction indices $n_j$ (Figure 1b). This kind of sample model describes both the superlattices with basic period containing more than two layers and bilayer superlattices with intermediate graded interfaces, which yield in this case parasitic artificial interlayers. For these samples, the combined technique can be used: numerical solution for recurrent equations with (2 x 2) transfer matrix $\hat{M}_L$ for basic period is supplemented with MEW approach for analytical calculation of total reflection coefficient $R_0(\alpha)$.

The wavefield within the j-layer of the first basic period is defined by Eq.(2) with coefficients $T_j$, $R_j$ following from the equations [2] (the sketch of wavefields in sublayers of the basic period is shown in Figure 1b) :

$$T_{1,j+1} = \frac{1}{t_{j+1,j}}[T_{1,j}e^{i(k_{z(j+1)} - k_{zj})z_j} + R_{1,j}r_{j+1,j}e^{i(k_{z(j+1)} + k_{zj})z_j}];$$

$$R_{1,j+1} = \frac{1}{t_{j+1,j}}[T_{1,j}r_{j+1,j}e^{-i(k_{z(j+1)} + k_{zj})z_j} + R_{1,j}e^{-i(k_{z(j+1)} - k_{zj})z_j}];$$

$$t_{j+1,j} = \frac{2k_{zj}}{k_{zj} + k_{z(j+1)}}; \qquad r_{j+1,j} = \frac{k_{zj} - k_{z(j+1)}}{k_{zj} + k_{z(j+1)}};$$

$$k_{z,j} = k\sqrt{n_j^2 - \cos^2\alpha}. \qquad (13)$$

To find the eigenwaves of the system, the transfer matrix $M_L$ has to be calculated for basic period. By the definition, this matrix gives a relation between the coefficients $T_{1,(L+1)} = T_{2,1}$; $R_{1,(L+1)} = T_{2,1}$ and parameters $T_1$, $R_1$ for wavefields $\Psi_j$ inside the superlattice. The formal solution of this problem can be found by successive iterative solution of equations (13), and the result is presented in compact matrix form[1]:

$$\Psi_{1,(L+1)} = \Psi_{2,1} = \hat{\Phi}_L \hat{Q}_L^{-1} \hat{\Phi}_{L-1} \hat{Q}_{L-1}^{-1} \ldots \hat{\Phi}_2 \hat{Q}_2^{-1} \hat{\Phi}_1 \Psi_{1,1};$$

$$Q_j = \frac{1}{t_{j+1,j}} \begin{pmatrix} 1 & r_{j+1,j} \\ r_{j+1,j} & 1 \end{pmatrix}; \quad \Phi_j = \begin{pmatrix} e^{-ik_{zj}z_j} & 0 \\ 0 & e^{ik_{zj}z_j} \end{pmatrix}. \tag{14}$$

Despite of formal simplicity of this solution, the real calcualtion of matrix $\hat{M}$ involves the calcualtion of the products of 2L (2x2) matrices, i.e. $\simeq 4(8)^L$ operations. The more effective algorithm is based on scalar Parratt's equations [2], which reduces the operations number down to $\simeq 4(4)^L$:

$$X_j = \frac{R_j}{T_j} = e^{-2ik_{zj}} \frac{r_{j,j+1} + X_{j+1}e^{2ik_{z(j+1)}z_j}}{1 + r_{j,j+1}X_j e^{2ik_{z(j+1)}z_j}}. \tag{15}$$

To use these equations for calculation of matrix $\hat{M}$, the boundary conditions for $X_j$ have to be changed. In reflectometry, the boundary conditions $X_L = 0$; $R_L = 0$; $T_0 = 1$ are usually used for the structure containing L layers. However, in the considered here case the initial transmission and reflection coefficients are not directly related. The most convenient way to calculate the transition matrix $\hat{M}$ seems to be above-mentioned matrix method. If phases of the wavefields in the first layer of basic period are defined as in Eq.(2), then matrix $\hat{M}$ depends not longer on the repetition number of basic periods, and Eq.(14) is modified. The recurrent equations (13) being resulted from the transformation of vectors $(T_j; R_j)$ are represented then by matrices:

$$\hat{A}_j = \frac{1}{t_{j+1,j}} \begin{pmatrix} e^{i(k_{zj}-k_{z(j+1)})z_j} & r_{j+1,j}e^{-i(k_{zj}+k_{z(j+1)})z_j} \\ r_{j+1,j}e^{i(k_{zj}+k_{z(j+1)})z_j} & e^{-i(k_{zj}-k_{z(j+1)})z_j} \end{pmatrix};$$

$$\hat{B}_j = \frac{1}{t_{j+1,j}} \begin{pmatrix} e^{ik_{zj}z_j} & r_{j+1,j}e^{-ik_{zj}z_j} \\ r_{j+1,j}e^{ik_{zj}z_j} & e^{-ik_{zj}} \end{pmatrix}. \tag{16}$$

The matrices $\hat{B}_J$ have to be used at both interfaces of basic period to eliminate the phase in the matrix $\hat{M}$ at the interface between the basic periods. Finally, the resulting transition matrix is:

$$\hat{M} = \hat{B}_L \hat{A}_{L-1} \hat{A}_{L-2} \ldots \hat{A}_2 \hat{B}_1. \tag{17}$$

To satisfy the continuity conditions (11) for wavefields at the interface between bottommost basic layer and substrate, the amplitudes $T_{N,L}$ and $R_{N,L}$ have to be expressed through the amplitudes $T_{N,1}$ and $R_{N,1}$:

$$\tilde{M}_{L-1} = \hat{A}_{L-1}\hat{A}_{L-2} \ldots \hat{A}_2 \hat{B}_1. \tag{18}$$

Further calculations are analogous to two-component case, described in the previous section. In particular, the eigenvalues $\lambda_{1,2}$ and their eigenvectors follow from Eqs.(6,7), using the elements of the matrix $\hat{M}$ in Eq.(18). The formula (12) for parameter $P_N$ is then slightly transformed:

$$R_0(\alpha) = -\frac{k_{z1}[1 - \nu_1 + P_N(1 - \nu_2)] - k_{z0}[1 + \nu_1 + P_N(1 + \nu_2)]}{k_{z1}[1 - \nu_1 + P_N(1 - \nu_2)] + k_{z0}[1 + \nu_1 + P_N(1 + \nu_2)]};$$

$$P_N = -(\frac{\lambda_1}{\lambda_2})^N \frac{(k_{zm} - k_{zL})(T_L^{(1)}e^{ik_{zL}d} + (k_{zm} + k_{zL})R_L^{(1)}e^{-ik_{zL}d}}{(k_{zm} - k_{zL})T_L^{(2)}e^{ik_{zL}d} + (k_{zm} + k_{zL})R_L^{(2)}e^{-ik_{zL}d}};$$

$$R_L^{(1,2)} = (\hat{M}_{L-1})_{21} + \nu_{(1,2)}(\hat{M}_{L-1})_{22}; \quad T_L^{(1,2)} = (\hat{M}_{L-1})_{11} + \nu_{(1,2)}(\hat{M}_{L-1})_{12}. \qquad (19)$$

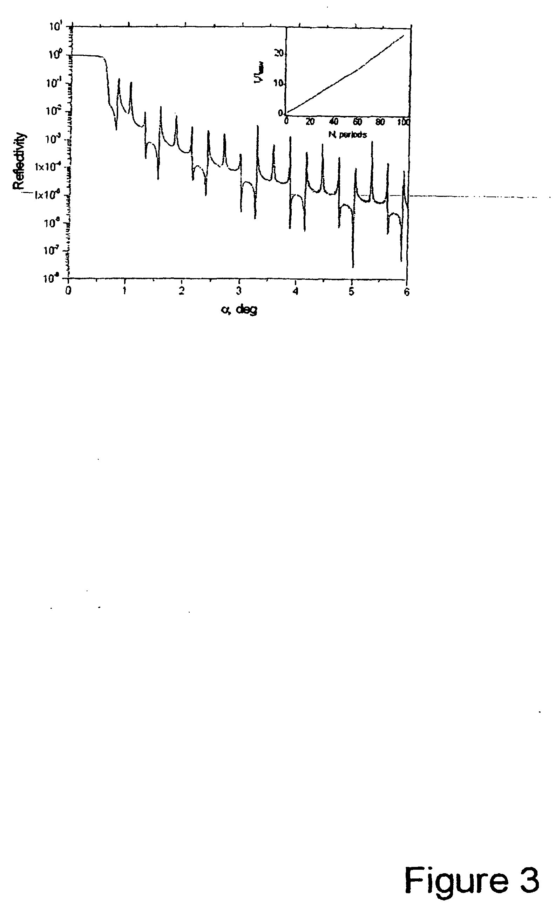

Figure 3 demonstrates the simulated x-ray reflectivity curves from the multicomponent superlattice *(AlAs/GαAs/InAs/GαSb)*$_{40}$ on the GaAs substrate, where the layer thicknesses are equal to (10/20/5/10)$_{40}$ nm, respectively. The comparison of required computer time for both straightforward Parratt's approach ($t_P$) and MEW technique ($t_M$) as the function of repetition period is presented on the inset in Fig.3. The calculation time is essentially reduced for single simulation by MEW, and for fitting procedure, which increases the number of single simulations geometrically with the number of fitted parameters, the time reduction becomes even more essential.

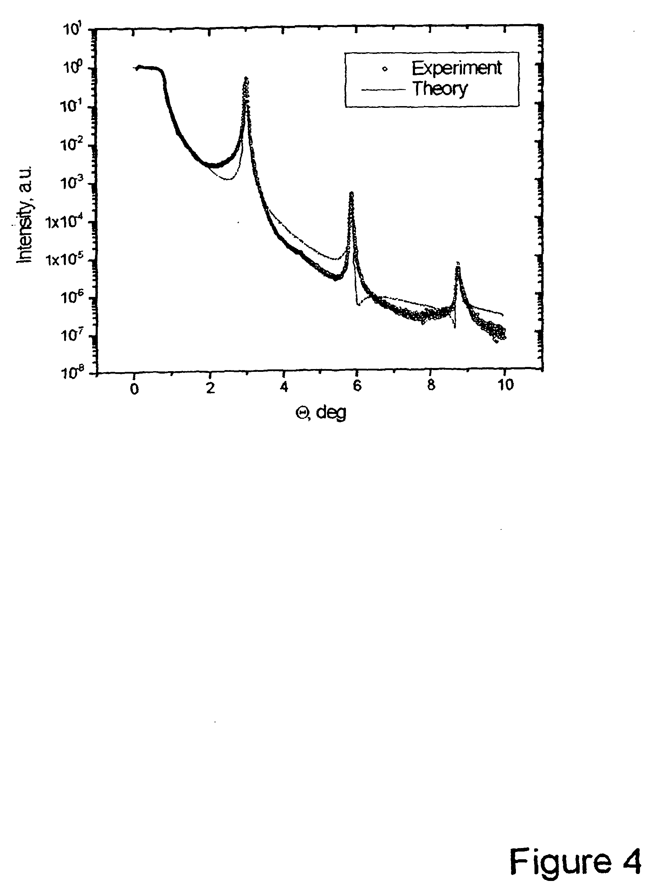

The MEW technique allows to naturally introduce the parameter describing the period thickness fluctuations in real superlattices. The necessity of this parameter follows from systematical discrepancy between the theoretical simulations and experimental measurements, *viz.* disagreement of the height and the width of SL peaks (Fig.4). Theoretical SL-peaks are usually overestimated in intensity, and this difference growth progressively with the order of SL peaks. This discrepancy can not be eliminated by introduction of intermediate interface layers or Debye-Waller factor or Nevot-Croce factor, i.e. by renormalization of individual reflection coefficients $r_{j+1,j}$.

To introduce an above-mentioned parameter, the transfer matrix $\hat{M}_L^{(l)}$ has to be re-interpreted on the basis of formal scattering theory [11]. From this point of view, the matrix elements can be considered as elements of scattering operator $\hat{S}^{(l)}(z)$ defined with the functions of initial i and final f states:

$$(\hat{M}_L^{(l)})_{if} = (\tilde{S})_{if} = \int_{z_l}^{z_{l+1}} dz e^{-ik_f(z-ld)}\hat{S}_L(z - ld)e^{ik_i(z-ld)}. \qquad (20)$$

The matrix elements (20) are shown above to be independ on indices *l*, in the case of ideal superlattice. In real superlattices, the period thickness has a statistical fluctuations $\delta$, and thus $z_l$, = $ld + \delta$. Neglecting a vertical correlation of interface roughness, which can be essential for interpretation of diffuse x-ray scattering [12], the matrix elements (20) obtain an additional phase factor, which does not depend on *l*. Assuming the Gaussian distribution of period fluctuations with root-mean-square $\sigma_d$, and averaging the Eq.(20) over the fluctuations, we arrive at:

$$< (\hat{M}_L^{(l)})_{if} > = e^{-1/2\sigma_d^2(k_f - k_i)^2} M_{if}^{(0)}. \qquad (21)$$

Here $M_{if}^{(0)}$ is a transfer matrix for ideal superlattice and exponential factor reduces the amplitude of elastic scattering of the wavefield by basic element of real SL. Actually, it is an analogue of Debye-Waller factor for crystallographic unit cell used for calculation of polarizability of the crystal [10]. This result causes the renormalization of matrix elements (18):

$$< M_{11} > = M_{11}; \qquad < M_{12} > = M_{12}e^{-1/2\sigma_d^2(k_{zL}+k_{z1})^2};$$

$$< M_{22} > = M_{22}; \qquad < M_{21} > = M_{21}e^{-1/2\sigma_d^2(k_{zL}+k_{z1})^2}, \qquad (22)$$

which are further used in Eqs.(6,7) for the eigenwaves of the periodical structure. Figure 4 shows how the parameter $\sigma_d$, taking into account the fluctuation of SL period, influences the formation of coherent SL-peaks. The simulated reflectivity curves fit much better the experimental measurements, that proves the importance of parameter $\sigma_d$ for quantification of superlattice quality.

## IV. MEW FOR HIGH-RESOLUTION X-RAY DIFFRACTION FROM SUPERLATTICES

The superlattices consisting of crystalline layers are widely used in modern semiconductor industry, and high-resolution x-ray diffraction is one of the most effective techniques for their investigations. The parameters characterizing the sample, e.g. layer thicknesses, doping concentrations, lattice deformation, lattice mismatch and others, are obtained from x-ray measurements in various experimental geometries, including extremely asymmetrical and grazing-incidence diffraction. Theoretical interpretation of these data requires a considerable computer resources, that makes all optimization of calculation algorithm for HRXRD very actual problem. In the same way as for x-ray reflectivity, the application of MEW for high-resolution x-ray diffraction is based on the analytical calculation of interference between the waves scattered from equivalent layers of superlattice period. However, the x-ray scattering from crystalline structure involves more complicated than in reflectometry transfer matrices, which possess a higher rank in this case.

The theory presented below assumes that the superlattice consists of repeating N times basic SL periods, every composed of L monocrystal layers. The difference in crystallographic structure of these layers can be caused either by different elemental composition of layers or gradiental lattice deformation of single layer due to the external forces. There are few ways to calculate the transfer matrix $\hat{M}_L$ for x-ray diffraction from the crystalline layers. Takagi-Taupin [13] formalism, being relatively simple in realization, gives a solution in approximation of slow variation of crystalline structure of layers stack. In opposite, the matrix formalism [8] of dynamical diffraction theory delivers an exact solution for transfer matrix $\hat{M}_L$, and here we use this approach along with the notations adopted in Ref. [8]. The wavefield with certain polarization ($\sigma$- or $\pi$) inside the layer $n$ is described by the wavefield

$$D_n(\mathbf{r}) = e^{i\mathbf{k}_n\mathbf{r}}[D_{0n} + D_{hn}e^{i\mathbf{h}_n\mathbf{r}}], \tag{23}$$

here $k_n$ and $k_{hn} = k_n + h_n$ arc the wavevectors of transmitted and diffracted by reciprocal lattice vector $h_n$ waves in $n$-layer. The amplitudes $D_{0n}$, $D_{hn}$ are assumed to be constant within the layer and satisfy to the equations of dynamical diffraction theory:

$$(k_n^2 - k^2)D_{0n} = k_n^2[\chi_0^n D_{0n} + \chi_{-h}^n D_{hn}];$$
$$(k_{hn}^2 - k^2)D_{hn} = k_n^2[\chi_0^n D_{hn} + \chi_h^n D_{0n}], \tag{24}$$

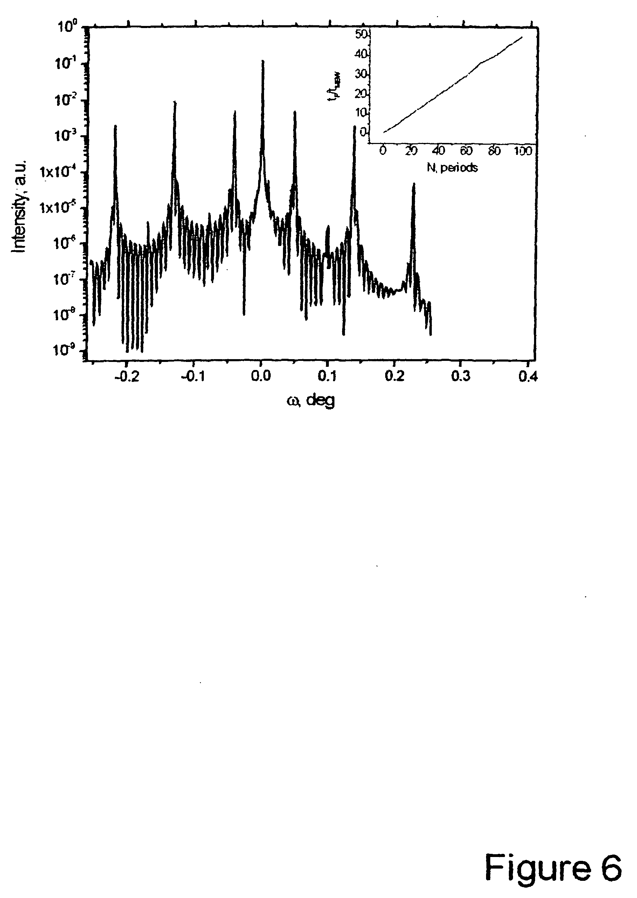

with Fourier-components $\chi_0^n$, $\chi_h^n$ of x-ray polarizability for $n$-layer. Using the notations of Figure 6 for vector components

$$k_z = k\gamma_0; \quad k_{hz} = k\gamma_h; \quad h_{zn} = k\psi_n; \quad k_{zn} = ku_n,$$

the parameter $u_n$, determining the effective refraction index for x-ray diffraction, follows from the equation [8]:

$$(u_n^2 - \gamma_0^2 - \chi_0^n)[(u_n + \psi_n)^2 - \gamma_h^2 - \chi_0^n] - \chi_{-h}^n\chi_h^n = 0;$$
$$\gamma_h^2 = (\gamma_0 + \psi)^2 + \alpha. \tag{25}$$

The variable $\alpha$ defines a deviation of the vector k from the exact Bragg condition at the top layer interface of basic superlattice period, and the amplitudes of transmitted and diffracted waves are connected by expressions:

$$D_{hn}^j = v_n^j D_{0n}^j; \quad v_n^j = [(u_n^j)^2 - \gamma_0^2 - -\chi_0^n]/\chi_{-h}^n. \tag{26}$$

The evolution of wavefield inside the basic period of superlattice is determined by the system of equations for amplitudes $D_{0n}^j$, which follows from the continiuty condition for the wavefields at the boundaries of layers (interfaces). The solution for this equation system for arbitrary experimental geometry is represented [5] by product of 2L (4x4) matrices $\hat{S}_n$ and $\hat{F}_n$:

$$\hat{S}_0 = \begin{pmatrix} 1 & 0 & 1 & 0 \\ 0 & 1 & 0 & 1 \\ \gamma_0 & 0 & -\gamma_0 & 0 \\ 0 & \gamma_h & 0 & -\gamma_h \end{pmatrix}; \hat{S}_n = \begin{pmatrix} 1 & 1 & 1 & 1 \\ v_n^1 & v_n^2 & v_n^3 & v_n^4 \\ u_n^1 & u_n^2 & u_n^3 & u_n^4 \\ w_n^1 & w_n^2 & w_n^3 & w_n^4 \end{pmatrix};$$

$$(\hat{F}_n)_{ij} = \delta_{ij} \exp[iku_n^j(z_{n+1} - z_n)]; \quad w_n^j = v_n^j(u_n^j + \psi_n). \tag{27}$$

However, the numerical problems arise for superlattices with large number of periods $N$, where multiple production of (4x4) matrices has to be done[8]. These problems are caused by operations with matrices, the elements of which grow exponentially with the increasing of N. In order to avoid these difficulties, new algorithm was suggested in [8] when the matrices are divided into the blocks of (2x2). The four-wave amplitudes $D_{0n}^j$ being combined into two two-component vectors $\bar{T}_n = (D_{0n}^1; D_{0n}^2); \quad \bar{R}_n = (D_{0n}^1; D_{0n}^2),$ are then related by the equations analogous to Parratt's ones [8]. This algorithm provides the required accuracy for arbitrary number of superlattice periods, however, increases twice the computation time in comparison with conventional matrix method. The MEW is shown to improve the accuracy as well as reduce the time of calcualtiou.

To construct the transition matrix $\hat{M}_L$ for basic period, four components of wavefield in n-th layer arc denoted as the 4-vector $\bar{D}_n$. The spacial phase of wavefield amplitudes in every layer has to be equal at the entrance interface of layer. Using the matrices (27), the boundary conditions for amplitudes in basic period are written as a system of $L$ vector equations:

$$\hat{S}_1 \hat{F}_1 \bar{D}_1 = \hat{S}_2 \bar{D}_2; \quad \ldots; \quad \hat{S}_L \hat{F}_L \bar{D}_1 = \hat{S}_1 \bar{D}_{L+1}. \tag{28}$$

Then the matrix $\hat{M}_L$ follows straighforward from the equations (28):

$$\hat{M}_L = \hat{X}_L \hat{X}_{L-1} \ldots \hat{X}_1; \quad \hat{X}_k = \hat{S}_{k+1}^{-1} \hat{S}_k \hat{F}_k. \tag{29}$$

Let us now introduce the normalized four-components eigenvectors $\bar{\Psi}^s$ and eigenvalues $\lambda_s$, enumerated in natural order of solutions for the equation:

$$\hat{M}_L \bar{\Psi}^s = \lambda_s \bar{\Psi}^s; \quad s = 1, \ldots, 4; \quad \sum_{i=1}^{4} (\Psi_i^s)^* (\Psi_i^s) = 1;$$

$$|\lambda_1| < |\lambda_2| < |\lambda_3| < |\lambda_4|. \tag{30}$$

The matrix $\hat{M}_L$ is not self-conjugated due to the absorption in the crystals, and therefore its eigenvectors do not satisfy the conditions of completeness and orthogonality, making the eigenvalues complex-valued. The MEW technique using these eigenwaves is realized in the same way as in Eq.(25). Firstly, the wavefield in the topmost layer of the basic period has to be represented as a linear superposition of the eigenvectors with coefficients defined by continiuty of the vacuum wavefield vector $\bar{E} = (1, 0, E_r, E_h)$ at the sample surface:

$$\bar{D}_1^{(1)} = \sum_{s=1}^{4} A_s \bar{\Psi}^s; \quad \hat{S}_0 \bar{E} = \hat{S}_1 \bar{D}_1^{(1)} = \hat{S}_1 \sum_{s=1}^{4} A_s \bar{\Psi}^s. \tag{31}$$

The evolution of wavefield through $N$ periods of superlattice is calculated algebraically:

$$\bar{D}_1^{(N+1)} = (\hat{M})^N \bar{D}_1^{(1)} = \sum_{s=1}^{4} (\lambda_s)^N A_s \bar{\Psi}^s. \tag{32}$$

The wavefield of x-ray beam in substrate is defined by 4-vector $\bar{D} = (D_1^{sub}, D_2^{sub}, 0, 0)$. The amplitudes of the waves reflected from the bottom interface of the substrate are assumed to be zero due to the damping out of wavefileds within the thick sample, $E_r$ and $E_h$ define the amplitudes of reflected and diffracted waves in vacuum [8].

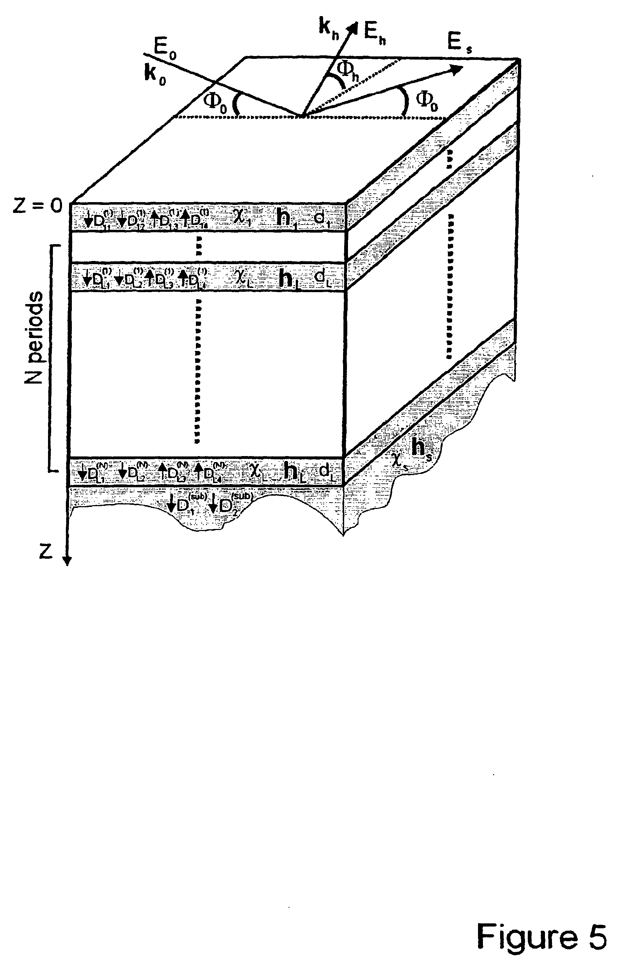

The conditions of continuity at the interface between superlattice and substrate has to be applied to the 4-vector $\bar{D}_L^{(N)}$, determining the wavefiled amplitude in the bottommost layer of the stack (Fig.5):

$$\bar{D}_L^{(N)} = \hat{F}_L^{-1} \hat{S}_L^{-1} \hat{S}_1 \bar{D}_1^{(N+1)};$$

$$\hat{S}_{sub} \bar{D} = \hat{S}_L \hat{F}_L \bar{D}_L^{(N)}. \tag{33}$$

As the result, the system of equations for 8 unknown values $(E_r, E_h, A_3, D_{1,2}^{sub})$ can be written as:

$$(\hat{S}_1^{-1} \hat{S}_{sub})_{ij} D_j^{sub} = \sum_{s=1}^{4} (\lambda_s)^N A_s \Psi_i^s;$$

$$(\hat{S}_1^{-1} \hat{S}_0)_{ij} E_j = \sum_{s=1}^{4} A_s \Psi_i^s. \tag{34}$$

The orthogonality condition for eigenvectors (30) can not be used for solution of these equations (see discussion after Eq.(30)). However, this system can be solved in general form, if four components of four eigenvectors are considered as (4 x 4) matrix:

$$\Psi_i^s \rightarrow (\hat{\Psi})_i^s.$$

Then the values A, can be excluded from the equations (34) using the reverse matrix $\hat{\Psi}^{-1}$;

$$(\hat{S}_1^{-1} \hat{S}_0)_{ij} E_j = \sum_{s=1}^{4} (\lambda_s)^{-N} (\hat{\Psi})_i^s (\hat{\Psi}^{-1})_j^s (\hat{S}_1^{-1} \hat{S}_{sub})_{jk} D_k^{sub}. \tag{35}$$

In order to avoid the exponentially increasing terms, the normalized matrix can be defined

$$(\hat{Q})_{ij} = \sum_{s=1}^{4} (\frac{\lambda_1}{\lambda_s})^N (\hat{\Psi})_i^s (\hat{\Psi}^{-1})_j^s, \tag{36}$$

and Eq.(35) is written then in the following form:

$$\bar{E} = \frac{1}{\lambda_1^N} \hat{Z} \bar{D}^{sub}; \quad \hat{Z} = \hat{S}_0^{-1} \hat{S}_1 \hat{Q} \hat{S}_1^{-1} \hat{S}_{sub}, \tag{37}$$

and the exponentially increasing value $(\lambda_1)^{-N}$ is cancelled in expression for amplitude $E_h$:

$$E_h = \frac{Z_{22}Z_{41} - Z_{42}Z_{21}}{Z_{11}Z_{22} - Z_{12}Z_{21}}. \tag{38}$$

Thus, the following problems of x-ray diffraction simulation are solved on the basis of MEW: (i) the time of calculation depends no longer on repetition period N, (ii) numerical algorithm operates with only finite values. Figure 6 shows the spectrum for the superlattice with crystalline layers $(Ge/Si/Si_{0.8}Ge_{0,2})_{100}$ with the thicknesses (30/20/10) nm, respectively, on the Si substrate. The curve has been simulated both by the recursive method[8] and MEW. Evidently, the results are undistingnishable because both methods are exact. However, MEW decreases drastically the calculation time $t_M$ in comparison with time $t_R$, required for recursive method, especially for multiperiodical superlattices (insert on Fig.6). Method of eigenwaves permits to naturally introduce an important integral characteristics of superlattices, viz. root-mean-square fluctuation $\sigma_L$ of basic period. The fluctuations are usually caused by imperfections of interfaces or/and by statistical fluctuations of sample growth conditions (temperature, etc). Similarly to reflectivity case (22), MEW takes into account period fluctuations by Deby-Waller factor in non-diagonal elements of averaged transition matrix $< \hat{M}_L >$:

$$< (\hat{M}_L)_{ij} > = (\hat{M}_L)_{ij} e^{-1/2\sigma_L^2 k^2 (u_1^i - u_L^j)^2} \tag{39}$$

with the solutions $u_n^i$ of the Eq. (25).

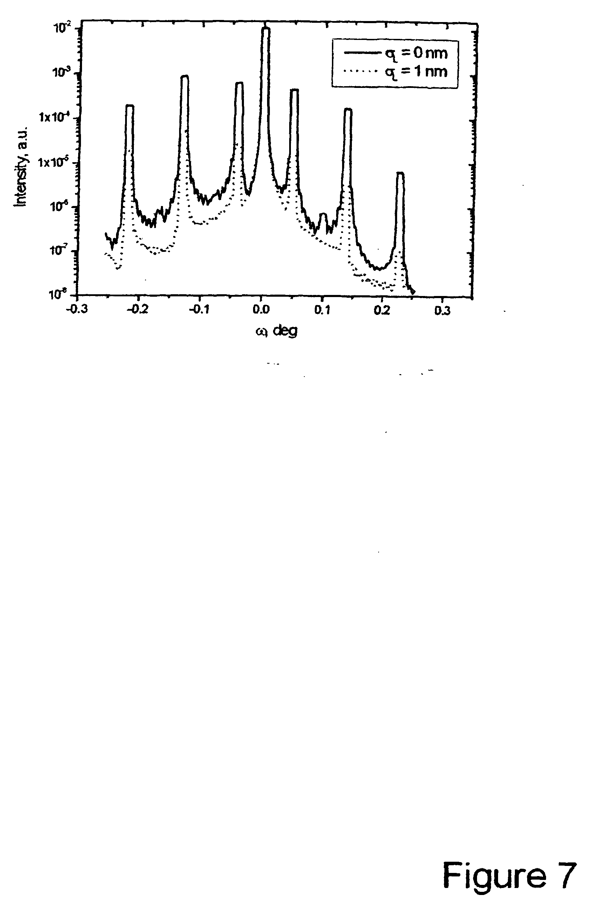

The period fluctuations result in the damping effect for SL-peaks in the same way as it was described in Section III for reflectometry. Moreover, the intensity damping factor of SL-peaks depends considerably on the harmonic order of peaks. The introduction of this parameter improves the fitting accuracy of experimental data by theory. The alternative methods for calculation of x-ray diffraction are unadapted for such a parametrization [8]. Figure 7 illustrates the effect of SL period fluctuations on the simulated theoretical intensity for the superlattice used in Figure 6. The solid line and dots correspond to the values $\sigma_L = 0$ and $\sigma_L = 1$nm, respectively. The curve in Figure 7 is the result of convolution of simulated intensity and detector instrumental function, which smoothes the fast oscillations of former. The fluctuations of superlattice period result in non-uniform intensity supression for SL-peaks of different order. This effect displays the analogy between renormalization of non-diagonal elements of transfer matrix in MEW and introduction of Debye-Waller factor for crystallographic unit cell for calculation of x-ray polarizability.

## V. CONCLUSIONS

The effective method for simulation of x-ray intensity scattered from the periodical superlattices is described. The essential advantage of proposed technique is independence of calculation time on the total number of repetition periods of SL. This permits to speed up the sample parameter fitting procedure (trial-and-error methods) used for experimental data treatment in modern nanotechnology. The method also delivers the analytical expression for wavefields in all the layers of multilayered structure without solving of recurrent equations. This is essential in the cases, when wavefields are used for calculation of matrix elements of perturbation operator. For example, these wavefields can be used for simulation of diffusely scattered x-ray intensity by means of distorted-wave Born approximation [1] or for calculation of x-ray radiation spectra from electrons [7].

## VI. ACKNOWLEDGEMENTS

This work is supported by Bruker AXS GmbH and International Science and Technology Center (grant B-626).

[1] U. Pietsch, V. Holy and T. Baumbach, *High Resolution X-Ray Scattering from Thin Films and Multilayers* (Springer Verlag, Heidelberg, 1999).

[2] L.G.Parratt, *Phys. Rev. ,* **95** (1954) 359.

[3] L. Abeles, Ann. *Phys (Paris)*, **3** (1948) 504, 5 (1950) 596.

[4] D. W. Berremen, *Phys. Rev. B ,* **14** (1976) 4313.

[5] S. A. Stepanov and R. Köhler, *J. Phys. D ,* **27** (1994) 1923.

[6] A.M.Dikhne, *Zh. Exper. Teor. Fiz. ,* **40** (1961) 1423.

[7] I. D. Feraadluk and A. P. Ulyanenkov, *Phys. Rev. B ,* **63** (2001) 155318.

[8] S.A.Stepanov, E.A.Kondrashkina, R. Köhler, D.V.Novikov, G.Materlik and S.M.Durbin, *Phys. Rev. B ,* 57 (1998) 4829.

[9] S.K.Sinha, E.V.Sirota, S.Garoff and H.B.Stanley, *Phys. Rev. B ,* 38 (1988) 2297.

[10] R.W.James, The *Optical Principles of the Diffraction of X-Rays(Ox* Bow Press, 1962).

[11] T.-Y. Wu and T.Omura Quantum *Theory of Scattering* (Prentice-Hall Inc., N.Y., 1962).

[12] V.Holy and T.Baumbach, *Phys. Rev. B ,* 49 (1994) 10 668.

[13] S.Takagi, *Acta Crystallogr.*, 15 (1962) 1311; D.Taupin, *Bull. Soc. Fr. Mineral. Cryst.*, 87 (1964) 469.

[14] W.J.Bartels, J.Honstra and D.J.W.Lobeek, *Acta Crystallogr. A ,* 42 (1986) 539.

[15] L.Nevot and P.Croce, Rev. *Phys. Appl.,* 15 (1980) 761.

[16] R-Pynn, *Phys.* Rev., B 45 (1992) 602.

[17] D.K.G. de Boer, *Phys.* Rev., B 49 (1994) 5817.

[18] L.D.Landau and E.M Lifshitz, *Electrodynamics of the Condensed* Media(Nauka, Moscow, 1982).

## Claims

1.  A method of simulation and/or fitting of X-ray scattering patterns comprising X-ray reflection and X-ray diffraction from multilayers with N repeating basic periods of a superlattice comprising a number L of single layers within each basic period, on a substrate with X-ray detection of experimental X-ray patterns and comparison of detected patterns with calculated patterns, said method comprising the following steps:

    a) introducing the scattering matrix (SM) of one basic period of the superlattice, wherein the scattering matrix consists of the product of the scattering matrices of the single layers within the basic period;
    b) construction of superlattice eigenwaves using diagonalisation of the scattering matrix;
    c) using the superlattice eigenwaves to obtain an analytical representation of the wavefield and a solution of the boundary problem for the finite number N of basic periods of the superlattice;
    d) calculation of the intensity distribution of the scattering patterns by an analytical formula based on step c).

2.  Method according to claim 1, **characterized in that** in step c) the analytical representation of the wavefield is calculated by

$$E_i^N = \lambda_1^N \sum_{j=1}^{P} \left[ \hat{Q}_N^{-1} \hat{S}_1^{-1} \hat{S}_0 \right]_j E_j^0$$

wherein $\hat{Q}_{ij} = \sum_{s=1}^{P} \left( \frac{\lambda_1}{\lambda_s} \right)^N \hat{\Psi}_i^s \left( \hat{\Psi}^{-1} \right)$, wherein $E_i^0$ is the incident and scattering fields in vacuum, wherein $\hat{S}_0$, $\hat{S}_1$ are scattering matrices describing the transformation of the wavefield passing through the interface, $\hat{S}_0$ corresponds to the interface between vacuum and first layer and $\hat{S}_1$ corresponds to interface between first layer and second layer, wherein $\lambda_s$ are eigenvalues of the transfer matrix $\hat{M}$ which describes the transformation of the wavefield passing through single basic period of the superlattice and $\Psi_i^s$ are eigenwaves of the transfer matrix $\hat{M}$, with

$$\hat{M}\Psi_i^s = \lambda_s \overline{\Psi}_i^s$$ ;with s,i =1...p , with p = 2 for X-ray reflection and p = 4 for X-ray diffraction, and wherein $E_i^N$ are components of the wavefield after passing N periods of the superlattice, wherein $\lambda_1$ is the maximal eigenvalue of $\lambda_s$.

3. A method according to any one of the preceding claims, **characterised in that** in step d) the intensity distribution for diffraction is calculated by

$$I_{diff} = \left| \frac{Z_{22}Z_{41} - Z_{42}Z_{21}}{Z_{11}Z_{22} - Z_{12}Z_{21}} \right| ,$$

wherein $I_{dif}$ is the intensity of the scattered radiation in vacuum for X-ray diffraction, and that the intensity distribution for reflection is calculated by

$$I_{spec} = \left| \frac{Z_{21}}{Z_{11}} \right|^2$$

wherein $I_{spec}$ is the intensity of the scattered radiation in vacuum for X-ray reflection,

wherein $\hat{Z} = \hat{S}_0^{-1}\hat{S}_1\hat{Q}\hat{S}_1^{-1}\hat{S}_{sub}$ , wherein $\hat{S}_{sub}$ is the scattering matrix describing the transformation of wavefield passing through the interface between bottommost layer and substrate, wherein $\hat{Q}_{ij} = \sum_{s=1}^{p} \left( \frac{\lambda_1}{\lambda_s} \right)^N \hat{\Psi}_i^s \left( \hat{\Psi}^{-1} \right)_j^s$ ,

wherein $\hat{S}_0$, $\hat{S}_1$ are scattering matrices describing the transformation of the wavefield passing through the interface, $\hat{S}_0$ corresponds to the interface between vacuum and first layer and $\hat{S}_1$ corresponds to interface between first layer and second layer, wherein $\lambda_s$ are eigenvalues of the transfer matrix $\hat{M}$ which describes the transformation of the wavefield passing through single basic period of the superlattice and $\Psi_i^s$ are eigenwaves of the transfer matrix $\hat{M}$,

with $\hat{M}\Psi_i^s = \lambda_s \overline{\Psi}_i^s$ ; with s,i =1...p , with $p$ = 2 for X-ray reflection and p = 4 for X-ray diffraction, wherein $\lambda_1$, is the maximal eigenvalue of $\lambda_s$.

4. A method according to any one of the preceding claims, **characterised in that** there is a mass density gradient across the single layers approximated by a finite number of discrete sublayers each with a uniform mass density.

5. A method according to any one of the preceding claims, **characterised in that** the X-ray scattering pattern comprises X-ray diffraction patterns from a crystal superlattice with crystallographic lattice strain gradients or material contamination gradients in the single layers approximated by a finite number of discrete sublayers each with a uniform lattice strain or material contamination.

6. A method according to any one of the preceding claims, **characterised in that** the X-ray scattering pattern comprises X-ray diffraction patterns from a crystal superlattice in the case of strongly asymmetrical and grazing-incidence or grazing-exit geometry of diffraction.

7. A method according to any one of the preceding claims, **characterised by** introducing as an additional parameter a mean squared fluctuation of the superlattice period for fitting of superlattice peaks in the X-ray scattering pattern.

8. A method according to any one of the preceding claims, **characterised by** introducing the analytical representation of the X-ray wavefield in the superlattice for fast simulation and fitting of any characteristics containing integrated electromagnetic fields such as diffuse scattering

**Revendications**

1. Procédé de simulation et/ou d'ajustement des spectres de diffusion des rayons X comprenant une réflexion des rayons X et une diffraction des rayons X à partir de multicouches avec N périodes de base répétées d'un superréseau comprenant un nombre L de couches simples dans chaque période de base, sur un substrat avec détection des rayons X de spectres de rayons X expérimentaux et comparaison des spectres détectés avec les spectres calculés, ledit procédé comprenant les étapes suivantes :

    a) introduction de la matrice de diffusion (SM) d'une période de base du superréseau, où la matrice de diffusion est constituée du produit des matrices de diffusion des couches simples dans la période de base ;
    b) construction d'ondes propres de superréseau en utilisant la diagonalisation de la matrice de diffusion ;
    c) utilisation des ondes propres de superréseau afin d'obtenir une représentation analytique du champ d'ondes et une solution du problème des conditions limites pour le nombre fini N de périodes de base du superréseau ;
    d) calcul de la distribution d'intensité des spectres de diffusion par une formule analytique fondée sur l'étape c).

2. Procédé selon la revendication 1, **caractérisé en ce que** à l'étape c), la représentation analytique du champ d'ondes est calculée par

$$E_i^N = \lambda_1^N \sum_{j=1}^p \left[ \hat{Q}_N^{-1} \hat{S}_1^{-1} \hat{S}_0 \right]_{ij} E_j^o$$

où

$$\hat{Q}_{ij} = \sum_{s=1}^p \left( \frac{\lambda_1}{\lambda_s} \right)^N \hat{\Psi}_i^s \left( \hat{\Psi}^{-1} \right),$$

où $E_i^o$ correspond aux champs d'incidence et de diffusion dans le vide, où $\hat{S}_0$, $\hat{S}_1$ sont des matrices de diffusion décrivant la transformation du champ d'ondes traversant l'interface, $\hat{S}_0$ correspond à l'interface entre le vide et la première couche et $\hat{S}_1$ correspond à l'interface entre la première couche et la deuxième couche, où $\lambda_s$ sont les valeurs propres de la matrice de transfert $\hat{M}$ qui décrit la transformation du champ d'ondes traversant ou passant par une période de base simple du superréseau et $\Psi_i^s$ sont les ondes propres de la matrice de transfert $\hat{M}$, avec

$$\hat{M} \Psi_i^s = \lambda_s \overline{\Psi}_i^s \ ;$$ avec s,i = 1...p, avec $p = 2$ pour la réflexion des rayons X et $p = 4$ pour la diffusion des rayons X, et où $E_i^N$ sont des composants du champ d'ondes après le passage de $N$ périodes du superréseau, où $\lambda_1$ est la valeur propre maximale de $\lambda_s$.

3. Procédé selon l'une quelconque des revendications précédentes, **caractérisé en ce que** dans l'étape d), la distribution d'intensité pour la diffraction est calculée par

$$I_{diff} = \left| \frac{Z_{22} Z_{41} - Z_{42} Z_{21}}{Z_{11} Z_{22} - Z_{12} Z_{21}} \right|,$$

où $I_{diff}$ est l'intensité du rayonnement diffusé dans le vide pour la diffraction des rayons X, et **en ce que** la distribution d'intensité pour la réflexion est calculée par

$$I_{spec} = \left| \frac{Z_{21}}{Z_{11}} \right|^2$$

où $I_{spec}$ est l'intensité du rayonnement diffusé dans le vide pour la réflexion des rayons X,
où

$$\hat{Z} = \hat{S}_0^{-1} \hat{S}_1 \hat{Q} \hat{S}_1^{-1} S_{sub},$$

où $S_{sub}$ est la matrice de diffusion décrivant la transformation du champ d'ondes traversant l'interface entre la couche la plus inférieure et le substrat, où

$$\hat{Q}_{ij} = \sum_{s=1}^{p} \left( \frac{\lambda_1}{\lambda_s} \right)^N \hat{\Psi}_i^s \left( \hat{\Psi}^{-1} \right)_j^s$$

où $\hat{S}_0$, $\hat{S}_1$ sont des matrices de diffusion décrivant la transformation du champ d'ondes traversant l'interface, $\hat{S}_0$ correspond à l'interface entre le vide et la première couche et $\hat{S}_1$ correspond à l'interface entre la première couche et la deuxième couche, où $\lambda_s$ correspond aux valeurs propres de la matrice de transfert $\hat{M}$ qui décrit la transformation du champ d'ondes traversant ou passant par la période de base simple du superréseau et $\Psi_i^s$ correspond aux ondes propres de la matrice de transfert $\hat{M}$, avec $\hat{M}\Psi_i^s = \lambda_s \overline{\Psi}_i^s$, avec s,i = 1...p, avec p = 2 pour la réflexion des rayons X et p = 4 pour la diffraction des rayons X, où $\lambda_1$ est la valeur propre maximale de $\lambda_s$.

4. Procédé selon l'une quelconque des revendications précédentes, **caractérisé en ce qu'**il existe un gradient de densité de masse entre les couches simples approché par un nombre fini de sous-couches distinctes, chacune avec une densité de masse uniforme.

5. Procédé selon l'une quelconque des revendications précédentes, **caractérisé en ce que** le spectre de diffusion des rayons X comprend des spectres de diffraction des rayons X d'un superréseau cristallin avec des gradients de contrainte de réseau cristallographique ou des gradients de contamination de matériel dans les couches simples approchés par un nombre fini de sous-couches distinctes, chacune avec un(e) effort ou contrainte de réseau ou une contamination de matériel uniformes.

6. Procédé selon l'une quelconque des revendications précédentes, **caractérisé en ce** le spectre de diffusion des rayons X comprend des spectres de diffraction des rayons X d'un superréseau cristallin dans le cas d'une géométrie de diffraction fortement asymétrique et à incidence ou sortie rasante.

7. Procédé selon l'une quelconque des revendications précédentes, **caractérisé par** l'introduction comme paramètre supplémentaire d'une moyenne des carrés des fluctuations de la période du superréseau pour ajuster les pics du superréseau dans le spectre de diffusion des rayons X.

8. Procédé selon l'une quelconque des revendications précédentes, **caractérisé par** l'introduction d'une représentation analytique du champ d'ondes des rayons X dans le superréseau pour une simulation et un ajustement rapides des toutes les caractéristiques contenant des champs électromagnétiques intégrés, tels que la diffusion diffuse.

**Patentansprüche**

1. Verfahren zum Simulieren und/oder Anpassen von Röntgen-Streumustern mit Röntgenreflektion und Röntgenbeugung von Mehrfachschichten mit N sich wiederholenden Grundperioden eines Übergitters mit einer Anzahl L von Einzelschichten in jeder Grundperiode, an ein Substrat mit Röntgendetektion von experimentellen Röntgenmustern und Vergleich der detektierten Muster mit berechneten Mustern, wobei das Verfahren die folgenden Schritte aufweist:

   a) Einführen der Streumatrix (SM) einer Grundperiode des Übergitters, wobei die Streumatrix aus dem Produkt der Streumatrizen der Einzelschichten innerhalb der Grundperiode besteht;
   b) Konstruktion von Übergitter-Eigenwellen mittels Diagonalisierung der Streumatrix;
   c) Verwenden der Übergitter-Eigenwellen, um eine analytische Darstellung des Wellenfelds und eine Lösung des Randwertproblems für die endliche Anzahl N von Grundperioden des Übergitters zu erhalten;
   d) Berechnen der Intensitätsverteilung der Streumuster durch eine analytische Formel auf der Basis von Schritt c).

2. Verfahren nach Anspruch 1, **gekennzeichnet dadurch, dass** in Schritt c) die analytische Darstellung des Wellenfelds berechnet wird durch

$$E_i^N = \lambda_1^N \sum_{j=1}^{p} \left[ \hat{Q}_N^{-1} \hat{S}_1^{-1} \hat{S}_0 \right]_{ij} E_j^0$$

wobei $\hat{Q}_{ij} = \sum_{s=1}^{p} \left( \dfrac{\lambda_1}{\lambda_s} \right)^N \hat{\Psi}_i^s \left( \hat{\Psi}^{-1} \right)_j^s$ , wobei $E_i^0$ die einfallenden und Streufelder im Vakuum sind, wobei $\hat{S}_0$, $\hat{S}_1$, Streumatrizen sind, die die Transformation des Wellenfelds, das die Grenzfläche durchläuft, beschreiben, $S_0$ entspricht der Grenzfläche zwischen dem Vakuum und der ersten Schicht und $\hat{S}_i$ entspricht der Grenzfläche zwischen der ersten Schicht und der zweiten Schicht, wobei $\lambda_s$ Eigenwerte der Transfermatrix $\hat{M}$ sind, welche die Transformation des Wellenfelds beschreibt, welches eine einzelne Grundperiode des Übergitters durchläuft, und $\Psi_i^s$ sind Eigenwellen der Transfermatrix $\hat{M}$, mit $\hat{M}\Psi_i^s = \lambda_s \overline{\Psi}_i^s$ ;mit s,i = 1...*p*, mit p = 2 für Röntgenreflektion und p = 4 für Röntgenbeugung, und wobei $E_i^N$ Komponenten des Wellenfelds nach Durchlaufen von N Perioden des Übergitters sind, wobei $\lambda_1$ der maximale Eigenwert von $\lambda_s$ ist.

3. Verfahren nach einem der vorhergehenden Ansprüche, **dadurch gekennzeichnet, dass** in Schritt d) die Intensitätsverteilung für die Beugung berechnet wird durch

$$I_{diff} = \left| \frac{Z_{22}Z_{41} - Z_{42}Z_{21}}{Z_{11}Z_{22} - Z_{12}Z_{21}} \right| ,$$

wobei $I_{diff}$ die Intensität der gestreuten Strahlung im Vakuum für Röntgenbeugung ist, und die Intensitätsverteilung für die Reflektion berechnet wird durch

$$I_{spec} = \left| \frac{Z_{21}}{Z_{11}} \right|^2$$

wobei $I_{spec}$ die Intensität der gestreuten Strahlung im Vakuum für Röntgenreflektion ist,

wobei $\hat{Z} = \hat{S}_0^{-1}\hat{S}_1\hat{Q}\hat{S}_1^{-1}\hat{S}_{sub}$, wobei $\hat{S}_{sub}$ die Streumatrix ist, die die Transformation des Wellenfelds beschreibt, das die Grenzfläche zwischen der untersten Schicht und dem Substrat durchläuft, wobei

$$\hat{Q}_{ij} = \sum_{s=1}^{p}\left(\frac{\lambda_1}{\lambda_s}\right)^N \hat{\Psi}_i^{\,s}\left(\hat{\Psi}^{-1}\right)_j^{s}\;,\;\text{wobei}\;\hat{S}_0,\;\hat{S}_1\;\text{Streumatrizen sind, die die Transformation des Wellenfelds be-}$$

schreiben, das die Grenzfläche durchläuft, $\hat{S}_0$ entspricht der Grenzfläche zwischen Vakuum und erster Schicht und $\hat{S}_1$ entspricht der Grenzfläche zwischen der ersten Schicht und der zweiten Schicht, wobei $\lambda_s$, Eigenwerte der Transfermatrix $M$ sind, welche die Transformation des Wellenfelds beschreibt, welches eine einzelne Grundperiode des Übergitters durchläuft, und $\Psi_i^{\,s}$ sind Eigenwellen der Transfermatrix $\hat{M}$, mit $\hat{M}\Psi_i^{\,s} = \lambda_s\,\overline{\Psi}_i^{\,s}$ ;*mit s,i* = 1...*p*, mit $p$ = 2 für Röntgenreflektion und mit $p$ = 4 für Röntgenbeugung, wobei $\lambda_1$ der maximale Eigenwert von $\lambda_s$, ist.

4. Verfahren nach einem der vorhergehenden Ansprüche, **dadurch gekennzeichnet, dass** ein Massendichtegradient über den Einzelschichten vorhanden ist, der durch eine endliche Anzahl von getrennten Unterschichten, die jeweils eine einheitliche Massendichte haben, angenähert wird.

5. Verfahren nach einem der vorhergehenden Ansprüche, **dadurch gekennzeichnet, dass** das Röntgen-Streumuster Röntgen-Beugungsmuster von einem Kristall-Übergitter mit kristallographischen Gitterverzerrungsgradienten oder Material-Kontaminationsgradienten in den Einzelschichten aufweist, die durch eine endliche Anzahl von getrennten Unterschichten, die jeweils eine einheitliche Gitterverzerrung oder Materialkontamination haben, angenähert werden.

6. Verfahren nach einem der vorhergehenden Ansprüche, **dadurch gekennzeichnet, dass** das Röntgen-Streumuster Röntgen-Beugungsmuster von einem Kristall-Übergitter bei einer stark asymmetrischen Beugungsgeometrie mit streifendem Einfall oder streifendem Austritt aufweist.

7. Verfahren nach einem der vorhergehenden Ansprüche, **gekennzeichnet durch** Einführen einer mittleren quadratischen Fluktuation der Übergitterperiode als zusätzlichen Parameter zum Anpassen der Übergittermaxima in dem Röntgen-Streumuster.

8. Verfahren nach einem der vorhergehenden Ansprüche, **gekennzeichnet durch** Einführen der analytischen Darstellung des Röntgen-Wellenfelds im Übergitter zur schnellen Simulation und Anpassung jeglicher Eigenschaften, die integrierte elektromagnetische felder enthalten, wie diffuse Streuung.

Figure 1

Figure 2

Figure 3

Figure 4

Figure 5

Figure 6

Figure 7